# EUROPÄISCHE PATENTSCHRIFT

(11) **EP 0 711 728 B1**
(45) Veröffentlichungstag und Bekanntmachung des Hinweises auf die Patenterteilung: **09.06.1999**
(21) Anmeldenummer: 95117253.5
(22) Anmeldetag: 02.11.1995
(51) Int. Cl.: C01B 7/04

(54) **Verfahren zur Oxidation von Chlorwasserstoff**
Process for the oxidation of hydrogen chloride
Procédé d'oxydation de gaz chlorhydrique

(30) Priorität: 14.11.1994 DE 4440642
(43) Veröffentlichungstag der Anmeldung: 15.05.1996
(73) Patentinhaber: BAYER AG, 51368 Leverkusen (DE)
(72) Erfinder: Dummersdorf, Hans-Ulrich, Dr., D-51399 Burscheid (DE); Gestermann, Fritz, Dr., D-51377 Leverkusen (DE); Härle, Helmut, Dr., D-51375 Leverkusen (DE); Minz, Franz-Rudolf, Dr., D-41542 Dormagen (DE); Waldmann, Helmut, Dr., D-51373 Leverkusen (DE); Judat, Helmut, Dr., D-40764 Langenfeld (DE); Kricsfalussy, Zoltan, Dr., D-51375 Leverkusen (DE); Wiechers, Gerhard, Dr., D-51381 Leverkusen (DE)

(56) Entgegenhaltungen:
- WO-A-91/08980
- DE-A- 2 905 781
- US-A- 4 107 280
- US-A- 4 537 835

## Beschreibung

Die vorliegende Erfindung betrifft ein verbessertes Verfahren zur Herstellung von Chlor aus Chlorwasserstoff.

Bei der technischen Anwendung von Chlor zur Herstellung von organischen Verbindungen bilden sich große Mengen an Chlorwasserstoff. So entstehen beispielsweise bei der Produktion von Isocyanaten, die als Rohstoffe für Schaumstoffe und Lacke dienen, zwischen 0,58 und 1,4 t Chlorwasserstoff pro Tonne Isocyanat. Bei der Chlorierung von Kohlenwasserstoffen, z.B. von Benzol und Toluol, entstehen ebenfalls große Mengen Chlorwasserstoff. So entsteht bei der Herstellung von Chlorbenzol pro Tonne Chlorbenzol 0,32 t Chlorwasserstoff.

Zur Entsorgung des Chlorwasserstoffs sind verschiedene Verfahren bekannt. So kann man beispielsweise den anfallenden Chlorwasserstoff nach Überführung in wäßrige Salzsäure elektrolytisch in Chlor und Wasserstoff spalten. Dieses Verfahren hat den Nachteil des hohen Bedarfs an elektrischer Energie. Man benötigt pro Tonne zu elektrolysierenden Chlorwasserstoff etwa 1600 KWh. Ein weiterer Nachteil sind die hohen Investitionskosten für die Bereitstellung der elektrischen Energie, für die Umspannung und Gleichrichtung des elektrischen Stromes und vor allem für die Elektrolysezellen.

Aus diesem Grund hat man schon versucht, die Oxidation von Chlorwasserstoff auf chemische Weise mit Sauerstoff und in Gegenwart von Katalysatoren durchzuführen. Dieses Verfahren wird in Lehrbüchern der anorganischen Chemie als "Deacon-Prozeß" bezeichnet (siehe z.B. Lehrbuch der anorganischen Chemie, Hollemann-Wiberg, 40.-46. Auflage 1958, S. 81 und 455). Der Vorteil dieses Deacon-Verfahrens besteht darin, daß für die Reaktion keine Energie von außen zugeführt werden muß. Nachteilig bei diesem Verfahren ist jedoch, daß die Reaktion nur bis zu einer Gleichgewichtseinstellung durchgeführt werden kann. Es muß daher nach Durchführung des Deacon-Verfahrens immer ein Gemisch aufgetrennt werden, das noch Chlorwasserstoff und Sauerstoff enthält.

Man hat auch schon versucht, diesen grundsätzlichen Nachteil des Deacon-Verfahrens durch eine Arbeitsweise in zwei Stufen zu beheben. Es ist z.B. beschrieben, Katalysatorsysteme zu verwenden, beispielsweise Cu(I)-Salze (siehe US-PS'en 4 119 705, 2 418 931, 2 418 930 und 2 447 323) oder Vanadiumoxide (siehe US-PS 4 107 280), die in der Lage sind, Sauerstoff und Chlorwasserstoff aufzunehmen und unter anderen Versuchsbedingungen, z.B. bei höherer Temperatur, wieder Chlor unter Rückbildung des ursprünglichen Katalysators abzuspalten. Der Vorteil eines derartigen Konzeptes liegt darin, daß das bei der Umsetzung von Chlorwasserstoff mit dem sauerstoffhaltigen Katalysator gebildete Reaktionswasser in der 1. Stufe abgetrennt werden kann und in der 2. Stufe hochangereichertes Chlor gebildet wird. Nachteilig bei diesem Konzept ist, daß das Katalysatorsystem zwischen den beiden Reaktionsstufen aufgeheizt und abgekühlt und gegebenenfalls von einer Reaktionszone in die andere transportiert werden muß. In Verbindung mit der relativ geringen Sauerstoffabgabefähigkeit der verwendeten Katalysatoren - z.B. kann 1 t Vanadiumoxid-Schmelze nur etwa 10 kg Sauerstoff abgeben - bedeutet dies einen erheblichen technischen Aufwand, der einen großen Teil der Vorteile des Deacon-Verfahrens aufzehrt.

Die bisher vorliegenden Konzepte zur technischen Realisierung des Deacon-Verfahrens in einer einstufigen Reaktion sind unbefriedigend. Der von Deacon im 19. Jahrhundert gemachte Vorschlag, einen Festbettreaktor mit einem Kupfer enthaltenden Katalysator mit Luft als Oxidationsmittel zu verwenden, liefert nur sehr verdünntes, unreines Chlor, das allenfalls zur Herstellung von Chlorbleichlauge verwendet werden kann (siehe Chem. Eng. Progr. 44, 657 (1948)).

Eine verbesserte Technik wurde mit dem sogenannten "Oppauer-Verfahren" entwickelt (siehe DE 857 633). Dabei verwendet man beispielsweise ein Gemisch aus Eisen(III)-chlorid und Kaliumchlorid, das als Schmelze bei Temperaturen von ca. 450°C als Reaktionsmedium und Katalysator dient. Als Reaktor verwendet man einen mit keramischem Material ausgemauerten Turm mit einem zentral eingebauten Innenrohr, so daß durch Einleiten der Eduktgase Chlorwasserstoff und Sauerstoff ein Zirkulieren der geschmolzenen Salze bewirkt wird.

Von außerordentlichem Nachteil bei diesem Konzept ist jedoch die sehr geringe Raum-Zeit-Ausbeute (etwa 15 g Chlor pro Liter Schmelze und pro Stunde). Deswegen ist das Oppauer-Verfahren gegenüber der Chlorwasserstoff-Elektrolyse nicht vorteilhaft.

Die schlechte Raum-Zeit-Ausbeute zieht eine große Zahl weiterer Nachteile nach sich, wie große Standvolumina an geschmolzenen Salzen, große Apparatevolumina mit entsprechend hohen Investitionskosten und eine konstenintensive Instandhaltung. Darüber hinaus lassen sich solche großen Schmelzvolumina bezüglich der Temperaturhaltung, der Aufheizung und beim Abstellen der Anlage thermisch nur sehr schlecht beherrschen, was durch die thermische Trägheit der großen Reaktoren noch verstärkt wird.

Um diese Nachteile zu vermeiden hat man vorgeschlagen, die Reaktion bei geringerer Temperatur durchzuführen, z.B. unter 400°C. Bei diesen Temperaturen besteht aber die Möglichkeit der Feststoffabscheidung aus der Kupfersalzschmelze. Man hat deshalb die Salzschmelze auf einem stückigen inerten Träger, z.B. Kieselsäure oder Aluminiumoxid, angebracht und die Reaktion in der Wirbelschicht durchgeführt (siehe GB-PS 908 022). Ein neuer Vorschlag empfiehlt Chrom enthaltende Katalysatoren auf inerten Trägern, wobei ebenfalls eine Temperatur unter 400°C gewählt wird (siehe EP-A 184 413).

Bei allen diesen Vorschlägen, die Probleme des Deacon-Verfahrens mit Hilfe der Wirbelschicht-Technik zu lösen, ist die unbefriedigende Stabilität der Katalysatoren und deren sehr aufwendige Entsorgung nach der Desaktivierung sehr nachteilig. Ferner bereitet der bei der Wirbelschicht-Technik nicht zu vermeidende Feinstaub Probleme bei seiner Abtrennung aus den Reaktionsgemischen. Überdies führt die wirbelnde Reaktionszone, die einen harten Katalysator benötigt, zu verstärkter Erosion, die in Verbindung mit der durch das Reaktionsgemisch hervorgerufenen Korrosion erhebliche technische Probleme erzeugt und die Verfügbarkeit einer technischen Anlage beeinträchtigt.

Ein weiterer Nachteil der Fahrweise mit geschmolzenen Salzen auf inerten Trägern, d.h. bei Temperaturen von über 400°C, besteht darin, daß eine befriedigende Reaktionsgeschwindigkeit und daraus resultierend eine gute Raum-Zeit-Ausbeute nur dann möglich ist, wenn ein relativ hoher Sauerstoffüberschuß angewendet wird. Das erfordert dann aber die Aufarbeitung des Reaktionsgemisches mit Hilfe eines Lösungsmittels, z.B. CCl₄ oder S₂Cl₂ (siehe DE-A 1 467 142).

Es stellte sich daher die Aufgabe, ein Verfahren zu finden, welches die Oxidation von Chlorwasserstoff mit Sauerstoff auf möglichst einfache Art und Weise und mit hoher Raum-Zeit-Ausbeute gestattet und welches die an sich vorteilhafte Technik der Verwendung eines Systems geschmolzener Salze als Katalysator gegenüber der Wirbelschicht-Technik für das Deacon-Verfahren nutzt und die Nachteile der bisherigen Varianten, z.B. des zweistufigen Salzschmelze-Verfahrens oder des einstufigen Oppauer-Verfahrens vermeidet. Dabei wäre es außerdem vorteilhaft, wenn mit einem geringeren Sauerstoffüberschuß gegenüber stöchiometrischen Bedingungen gearbeitet werden könnte.

Es wurde nun ein Verfahren zur Oxidation von Chlorwasserstoff mit Sauerstoff in Gegenwart einer Salzschmelze gefunden, das dadurch gekennzeichnet ist, daß man
- eine Salzschmelze einsetzt, die Metallsalze, schmelzpunktserniedrigende Salze und Promotoren enthält,
- bei Temperaturen zwischen 300 und 600°C arbeitet,
- die Salzschmelze in dem Chlorwasserstoff und Sauerstoff enthaltenden Gas Kontinuerlich so dispergiert, daß Kontaktzeiten von 0,01 bis 100 Sekunden resultieren,
- die Reaktionsgase abkühlt und Chlorwasserstoff und Wasser aus dem Reaktionsgemisch abscheidet,
- die von der Hauptmenge Wasser und einen Teil des Chlorwasserstoffs befreiten Reaktionsgase mit Schwefelsäure von restlichem Wasser befreit und
- das dann im wesentlichen Chlor, Chlorwasserstoff und Sauerstoff enthaltende Gasgemisch auf 2 bis 10 bar komprimiert, das Chlor durch Abkühlen verflüssigt und, gegebenenfalls nach weiterer Reinigung, abtrennt und
- das verbleibende, im wesentlichen Sauerstoff enthaltende Gas ganz oder teilweise in die die Reaktionszone zurückführt.

Dem erfindungsgemäßen Verfahren kann grundsätzlich Chlorwasserstoff beliebiger Herkunft zugeführt werden, z.B. beliebige Chlorwasserstoff enthaltende Gasmischungen. Bevorzugt sind Chlorwasserstoff enthaltende Gasmischungen wie sie bei Chlorierungen und Phosgenierungen anfallen. Solche Chlorwasserstoff-haltigen Gasströme können gasförmig oder als in Wasser absorbierte wäßrige Salzsäure in das erfindungsgemäße Verfahren eingespeist werden. Die Chlorwasserstoff enthaltenden Gasströme können je nach Herkunft gegebenenfalls organische Verunreinigungen enthalten, z.B. Kohlenmonoxid, Kohlenoxidsulfid, Phosgen und chlorierte und nicht-chlorierte Organika, etwa verschiedene Chlorbenzole. Es ist im allgemeinen zweckmäßig, den Gehalt von organischen Verunreinigungen im einzusetzenden Chlorwasserstoff so klein wie möglich zu halten, um die Bildung unerwünschter, häufig toxischer Chlor-Organika zu minimieren. Dies kann in an sich bekannter Weise, z.B. durch Absorption mit Wasser und/oder durch Adsorption an einem Adsorptionsmittel, z.B. Aktivkohle, erfolgen.

Den benötigten Sauerstoff kann man als solchen oder im Gemisch mit, vorzugsweise inerten Gasen einsetzen. Bevorzugt sind Gase mit Sauerstoffgehalten von über 90 Vol-%.

Salzschmelzen ohne Promotoren können z.B. Gemische aus Metallsalzen und schmelzpunktserniedrigenden Salzen sein. Metallsalze können für die Oxidation von Chlorwasserstoff mit Sauerstoff sowohl katalytisch aktive als auch katalytisch nicht-aktive Salze sein.

Als Metallsalze können z.B. Salze der Metalle der I. bis V. Hauptgruppe und der I. bis VIII. Nebengruppe des Periodensystems der Elemente eingesetzt werden. Bevorzugt sind Salze von Aluminium, Lanthan, Titan, Zirkon, Vanadium, Niob, Chrom, Molybdän, Wolfram, Mangan, Eisen, Kobalt, Nickel, Kupfer und Zink. Besonders bevorzugt sind Salze von Vanadium, Chrom, Mangan, Eisen, Kobalt, Nickel, Kupfer und Zink. Ganz besonders bevorzugt sind Kupfersalze.

Schmelzpunktserniedrigende Salze können z.B. Salze der Metalle der I. bis III. Haupt- und Nebengruppe und der IV. bis V. Hauptgruppe des Periodensystems der Elemente sein, beispielsweise Salze von Lithium, Natrium, Kalium, Rubidium, Cäsium, Magnesium, Calcium, Strontium, Barium, Aluminium, Gallium, Indium, Thallium, Germanium, Zinn, Blei, Antimon, Bismut, Zink und Silber. Bevorzugt sind Salze von Lithium, Natrium, Kalium, Aluminium und Zink. Besonders bevorzugt sind Salze von Kalium.

Salzschmelzen ohne Promotoren sind z.B. Gemische der folgenden Art:
LiCl/KCl, ZnCl₂/KCl, KCl/NaCl/LiCl, MgCl₂/KCl, AlCl₃/KCl, AlCl₃/NaCl, V₂O₅/K₂SO₄/K₂S₂O₇, CrCl₃/NaCl/KCl, MnCl₂/NaCl, MnCl₂/KCl, MnCl₂/KCl/NaCl, MnCl₂/AlCl₃, MnCl₂/GaCl₃, MnCl₂/SnCl₂, MnCl₂/PbCl₂, MnCl₂/ZnCl₂, FeCl₃/LiCl, FeCl₃/NaCl, FeCl₃/KCl, FeCl₃/CsCl, FeCl₃/KCl, FeCl₃/AlCl₃, FeCl₃/GaCl₃, FeCl₃/SnCl₄, FeCl₃/PbCl₂, FeCl₃/BiCl₃, FeCl₃/TiCl₄, FeCl₃/MoCl₅, FeCl₃/ZnCl₂, FeCl₃/NaCl/ZrCl₄, FeCl₃/KCl/ZrCl₄, FeCl₃/NaCl/WCl₄, CoCl₂/NaCl, CoCl₂/KCl, CoCl₂/GaCl₃, CoCl₂/SnCl₂, CoCl₂/PbCl₂, CoCl₂/ZnCl₂, CuCl/NaCl, CuCl/KCl, CuCl/RbCl, CuCl/CsCl, CuCl/AlCl₃, CuCl/GaCl₃, CuCl/InCl₃, CuCl/TlCl, CuCl/SnCl₂, CuCl/PbCl₂, CuCl/BiCl₃, CuCl/FeCl₃, CuCl/AgCl, CuCl/ZnCl₂, LaCl₃/FeCl₂/SnCl₂, NaCl/SnCl₂, FeCl₂/SnCl₂ und NaCl/CaCl₂. Bevorzugt sind Gemische der Art V₂O₅/K₂SO₄/K₂S₂O₇, CrCl₃/NaCl/KCl, MnCl₂/KCl, FeCl₃/KCl und CuCl/KCl. Besonders bevorzugt sind Gemische der Art V₂O₅/K₂SO₄/K₂S₂O₇, FeCl₃/KCl und CuCl/KCl. Ganz besonders bevorzugt ist ein Gemisch aus KCl und CuCl.

Werden Metalloxide, z.B. V₂O₅, eingesetzt, wandeln sich diese bei Durchführung des erfindungsgemäßen Verfahrens in Salze um.

Die den Salzschmelzen zuzusetzenden Promotoren können z.B. Metallsalze der I. bis VIII. Nebengruppe des Periodensystems der Elemente und/oder der seltenen Erden sein, etwa Salze von Scandium, Yttrium, Lanthan, Titan, Zirkon, Hafnium, Vanadium, Niob, Tantal, Chrom, Molybdän, Wolfram, Mangan, Rhenium, Eisen, Ruthenium, Kobalt, Rhodium, Iridium, Nickel, Palladium, Platin, Kupfer, Silber, Gold und Salze der Seltenen Erden, etwa Salze von beispielsweise Cer, Praseodym, Neodym, Samarium, Europium, Gadolinium, sowie von Thorium und Uran. Bevorzugt sind Salze von Lanthan, Titan, Zirkon, Vanadium, Chrom, Molybdän, Wolfram, Mangan, Rhenium, Eisen, Ruthenium, Kobalt, Rhodium, Iridium, Nickel, Palladium, Platin, Kupfer, Cer, Praseodym, Neodym und Thorium. Besonders bevorzugt sind Salze von Lanthan, Vanadium, Chrom, Mangan, Eisen, Kobalt, Nickel, Kupfer, Cer, Praseodym und Neodym. Ganz besonders bevorzugt sind Salze von Eisen und Kupfer.

Promotoren enthaltende Gemische sind z.B. Gemische der folgenden Art:
LiCl/KCl/FeCl₃, LiCl/KCl/NdCl₃/PrCl₃, KCl/NaCl/LiCl/FeCl₃, KCl/NaCl/LiCl/NdCl₃/PrCl₃, MgCl₂/KCl/FeCl₃, MgCl₂/KCl/NdCl₃/PrCl₃, MgCl₂/KCl/LaCl₃, MgCl₂/KCl/CeCl₃, AlCl₃/KCl/FeCl₃, AlCl₃/KCl/NdCl₃, AlCl₃/KCl/PrCl₃, AlCl₃/KCl/NdCl₃/PrCl₃, AlCl₃/KCl/LaCl₃, AlCl₃/KCl/CeCl₃, AlCl₃/NaCl/FeCl₃, AlCl₃/NaCl/NdCl₃, AlCl₃/NaCl/PrCl₃, AlCl₃/NaCl/NdCl₃/PrCl₃, AlCl₃/NaCl/LaCl₃, AlCl₃/NaCl/CeCl₃, V₂O₅/K₂SO₄/K₂S₂O₇/FeCl₃, V₂O₅/K₂SO₄/K₂S₂O₇/CuCl, V₂O₅/K₂SO₄/K₂S₂O₇/LaCl₃, V₂O₅/K₂SO₄/K₂S₂O₇/CeCl₃, V₂O₅/K₂SO₄/K₂S₂O₇/NdCl₃, V₂O₅/K₂SO₄/K₂S₂O₇/NdCl₃/PrCl₃, CrCl₃/NaCl/KCl/FeCl₃, MnCl₂/KCl/FeCl₃, MnCl₂/KCl/LaCl₃, MnCl₂/KCl/CeCl₃, MnCl₂/KCl/NdCl₃/PrCl₃, MnCl₂/AlCl₃/FeCl₃, MnCl₂/KCl/NaCl/FeCl₃, MnCl₂/SnCl₂/FeCl₃, MnCl₂/SnCl₂/LaCl₃, MnCl₂/SnCl₂/CeCl₃, MnCl₂/SnCl₂/NdCl₃, MnCl₂/SnCl₂/PrCl₃, MnCl₂/SnCl₂/NdCl₃/PrCl₃, FeCl₃/KCl/NdCl₃/PrCl₃, FeCl₃/LiCl/CuCl, FeCl₃/NaCl/CuCl, FeCl₃/KCl/CuCl, FeCl₃/ZnCl₂/CuCl, FeCl₃/NaCl/ZrCl₄, CoCl₂/SnCl₂/FeCl₃, CuCl/KCl/FeCl₃, CuCl/AlCl₃/FeCl₃, CuCl/BiCl₃/FeCl₃, CuCl/CsCl/FeCl₃, CuCl/FeCl₃, CuCl/SnCl₂/FeCl₃, CuCl/ZnCl₂/FeCl₃, CuCl/TICl/FeCl₃, CuCl/KCl/NdCl₃, CuCl/KCl/PrCl₃, CuCl/KCl/LaCl₃, CuCl/KCl/CeCl₃, CuCl/KCl/NdCl₃/PrCl₃, ZnCl₂/KCl/FeCl₃, ZnCl₂/KCl/NdCl₃/PrCl₃. Bevorzugt sind Gemische der Art: V₂O₅/K₂SO₄/K₂S₂O₇/FeCl₃, FeCl₃/KCl/NdCl₃/PrCl₃, CuCl/KCl/FeCl₃, CuCl/AlCl₃/FeCl₃, CuCl/BiCl₃/FeCl₃, CuCl/CsCl/FeCl₃, CuCl/FeCl₃, CuCl/SnCl₂/FeCl₃, CuCl/ZnCl₂/FeCl₃, CuCl/KCl/NdCl₃, CuCl/KCl/PrCl₃, CuCl/KCl/LaCl₃, CuCl/KCl/CeCl₃, CuCl/KCl/NdCl₃/PrCl₃, CeCl₃/NaCl/SnCl₂, CeCl₃/FeCl₂/SnCl₂ und NdCl₃/NaCl/CaCl₂. Besonders bevorzugt sind CuCl/KCl/FeCl₃, CuCl/KCl/NdCl₃, CuCl/KCl/PrCl₃ und CuCl/KCl/NdCl₃/PrCl₃-Gemische. Ganz besonders bevorzugt ist ein Gemisch aus CuCl, KCl und FeCl₃.

Die einzusetzenden Salzschmelzen können gegebenenfalls auch mehrere Komponenten aus der Gruppe der Metallsalze, der schmelzpunktserniedrigenden Salze und/oder der Promotoren gleichzeitig enthalten.

Wenn ein Promotor auch die für schmelzpunkterniedrigende Salze gegebene Definition erfüllt, ist in diesem Fall die gesonderte Zugabe eines schmelzpunkterniedrigenden Salzes nicht unbedingt erforderlich, der Promotor übernimmt dann beide Funktionen. Es ist jedoch bevorzugt, Salzschmelzen einzusetzen, die mindestens 3 verschiedene Komponenten enthalten, wobei mindestens eine Komponente die für Metallsalze, mindestens eine Komponente die für schmelzpunkterniedrigende Salze und mindestens eine Komponente die für Promotoren gegebene Definition erfüllt.

Wenn die Metallkomponente der beschriebenen Salzschmelzenbestandteile mehrere Oxidationsstufen annehmen kann, beispielsweise Eisen, Kupfer oder Vanadium, so kann diese Metallkomponente in beliebiger Oxidationsstufe oder in beliebigen Mischungen verschiedener Oxidationsstufen eingesetzt werden. Während der Durchführung des erfindungsgemäßen Verfahrens kann sich die Oxidationsstufe ändern.

Der Anteil der im erfindungsgemäßen Verfahren verwendeten schmelzpunktserniedrigenden Salze, bezogen auf die gesamte Schmelze, kann zwischen 0 und 99 Gew.-%, bevorzugt zwischen 10 und 90 Gew.-% liegen und entspricht ganz besonders bevorzugt etwa der Zusammensetzung des eutektischen Gemischs der verwendeten Komponenten.

Die Konzentration von Promotoren in der Salzschmelze kann z.B. 0,1 bis 100 Mol-%, bevorzugt 0,1 bis 50 Mol-% und besonders bevorzugt 0,1 bis 10 Mol-% betragen, jeweils bezogen auf die gesamte Salzschmelze.

Man kann die im erfindungsgemäßen Verfahren zu verwendenden Metallsalze, schmelzpunktserniedrigenden Salze und gegebenenfalls Promotoren z.B. direkt als Salze, z.B. als Halogenide, Nitrate, Sulfate oder Pyrosulfate einsetzen. Man kann auch Vorläufer von Metallsalzen einsetzen, z.B. Metalloxide oder -hydroxide oder elementare Metalle, die sich bei der Durchführung des erfindungsgemäßen Verfahrens in Metallsalze umwandeln. Bevorzugt werden Chloride eingesetzt.

Das Verhältnis von Chlorwasserstoff zu Sauerstoff kann in weiten Grenzen variiert werden. Zum Beispiel kann das molare Verhältnis von Chlorwasserstoff zu Sauerstoff zwischen 40:1 und 1:2,5 variieren. Bevorzugt liegt dieses Verhältnis zwischen 20:1 und 1:1,25, besonders bevorzugt zwischen 8:1 und 1:0,5 ganz besonders bevorzugt zwischen 5:1 und 1:0,3.

Das Chlorwasserstoff und Sauerstoff enthaltende Gas wird als kontinuierliche Phase in eine Reaktionszone geführt und die Salzschmelze darin dispergiert. Vorzugsweise führt man die kontinuierliche Phase und die Salzschmelze im Gegenstrom zueinander, realisiert Kontaktzeiten zwischen 0,1 und 4 Sekunden und arbeitet bei 350 bis 550°C. Geeignete Reaktoren hierfür sind z.B. Füllkörper-und Düsenreaktoren, Rieselfilmkolonnen und Sprühtürme.

Die aus der Reaktion kommenden Gase können beispielsweise 40 bis 50 Gew.-% Chlor, 30 bis 40 Gew.-% Chlorwasserstoff, 0,5 bis 10 Gew.-% Sauerstoff, 10 bis 20 Gew.-% Wasser (Dampf) und gegebenenfalls eingeschleppte Inertgase, z.B. Stickstoff und gegebenenfalls geringe Mengen Organika enthalten.

Bevor man die aus der Reaktion kommenden Gase abkühlt und Chlorwasserstoff und Wasser daraus abscheidet ist es vorteilhaft, zunächst mitgerissene und/oder verflüchtigte Anteile der Salzschmelze daraus zu entfernen. Hierzu kann man diese Gase beispielsweise mit einer oder mehreren kondensierten Phasen aus dem Gesamtverfahren waschen und die Waschflüssigkeit in die Reaktionszone zurückführen.

Die gegebenenfalls von mitgerissenen und/oder verflüchtigten Salzschmelze-Anteilen befreiten Reaktionsgase kühlt man vorzugsweise rasch auf eine Temperatur unter 300°C, vorzugsweise unter 200°C und insbesondere auf 120 bis 180°C ab. Beispielsweise kann man diese Abkühlung in einem Einspritzkühler vornehmen. Alternativ oder zusätzlich kann man die Reaktionsgase in einem mit bereits kondensierter, wäßrigen Salzsäure gefüllten Absorptionsturm, gegebenenfalls unter Zusatz von Frischwasser, abkühlen und Chlorwasserstoff und Wasser gemeinsam kondensieren.

Die Konzentration der erhaltenen wäßrigen Salzsäure kann in weiten Grenzen variiert werden, was dem Fachmann keine Schwierigkeiten bereitet. Vorzugsweise strebt man an, 35 bis 37 gew.-%ige wäßrige Salzsäure zu erhalten (sogenannte konzentrierte Salzsäure). Diese kann dann für beliebige Zwecke verwendet werden, für die bekanntermaßen konzentrierte wäßrige Salzsäure angewendet wird. Vor der Weiterverwendung kann eine an sich bekannte Reinigung durchgeführt werden, beispielsweise durch Ausblasen mit Inertgas (z.B. Luft) und/oder durch Absorption von Verunreinigungen (z.B. an Aktivkohle). Auf diese Weise können z.B. restliches Chlor und/oder vorhandene Organika entfernt werden. Auf diese Weise ist es möglich, z.B. 5 bis 15 Gew.-% des dem erfindungsgemäßen Verfahren zugeführten Chlorwasserstoffs als reine, vorzugsweise konzentrierte wäßrige Salzsäure zu erhalten.

Man kann die abgetrennte wäßrige Salzsäure auch auf andere Weise verwenden. So kann man beispielsweise die primär abgetrennte wäßrige Salzsäure mit konzentrierter Schwefelsäure versetzen und sie so vom Wasser befreien. Das so erhaltene, vorzugsweise ungereinigte Chlorwasserstoffgas kann dann in die Reaktionszone des erfindungsgemäßen Verfahrens zurückgeführt werden. Das Reaktionswasser fällt in diesem Fall als mehr oder weniger verdünnte Schwefelsäure an. Diese kann in bekannter Weise verwendet oder aufkonzentriert und so das Reaktionswasser als solches erhalten werden.

Der nach der Abkühlung und Abscheidung von Chlorwasserstoff und Wasser verbleibende Gasstrom enthält im wesentlichen das in der Reaktionszone gebildete Chlor, nicht umgesetzten Sauerstoff, restliche Anteile von Chlorwasserstoff und Wasserdampf sowie gegebenenfalls Inertgase und/oder gegebenenfalls geringe Mengen Organika.

Bevor man aus diesem Gasstrom das Chlor abtrennt, entfernt man zunächst restlichen Wasserdampf. Dies wird durch Zusatz von konzentrierter Schwefelsäure erreicht. Die anfallende, im allgemeinen nur wenig verdünnte Schwefelsäure, kann, gegebenenfalls nach Aufkonzentrierung, an anderer Stelle des erfindungsgemäßen Verfahrens oder auf sonstige (bekannte) Weise weiterverwendet werden, z.B. zur Herstellung von Düngemitteln.

Der vom restlichen Wasserdampf weitestgehend befreite Gasstrom enthält beispielsweise 60 bis 97 Gew.-% Chlor und wird nunmehr auf 2 bis 10 bar komprimiert. Diese Kompression kann ein- oder mehrstufig durchgeführt werden. Vorzugsweise arbeitet man in zwei Stufen. Als Kompressionsvorrichtungen kommen z.B. Kolbenverdichter, Rotationsverdichter und Schraubenverdichter in Frage. Nach der Kompression kühlt man das Gasgemisch so weit ab, daß das Chlor sich verflüssigt. Geeignete Temperaturen sind z.B. bei einem Druck von 10 bar solche unter 34°C und bei einem Druck von 2 bar solche unter -20°C. Bei anderen Drucken kann man geeignete Temperaturen durch Extrapolieren aus diesen Werten ermitteln. Man erhält so Chlor in flüssiger Form, das, gegebenenfalls nach weiterer Reinigung, in flüssiger Form oder nach Verdampfung wie aus der Elektrolyse von Natriumchlorid stammendes Chlor verwendet werden kann. Vorzugsweise verwendet man es für Chlorierungen und Phosgenierungen organischer Verbindungen. Wenn man das abgetrennte Chlor in gasförmiger Form weiterverwendet kann man die im in flüssiger Form abgetrennten Chlor gespeicherte Kälte für beliebige Kühlzwecke nutzbar machen.

Das nach der Chlorabtrennung verbleibende Gas enthält im allgemeinen im wesentlichen Sauerstoff, daneben geringe Spuren Chlor und Chlorwasserstoff, gegebenenfalls Inertgase und/oder gegebenenfalls geringe Mengen Organika, meist Chlor-Organika. Dieses Gas wird ganz oder teilweise in die Reaktionszone des erfindungsgemäßen Verfahrens zurückgeführt. Es ist vorteilhaft, insbesondere bei längerer Durchführung des erfindungsgemäßen Verfahrens, nur einen Teil dieses Gases zurückzuführen und den Rest auszuschleusen. Man vermeidet so eine Kumulierung von Inertgas und Organika im Reaktionssystem. Aus dem ausgeschleusten Teil des Gases kann man umweltbelastende Bestandteile, z.B. Chlor, Chlorwasserstoff und gegebenenfalls organische Verunreinigungen, insbesondere chlorierte organische Verunreinigungen durch Absorption und/oder Adsorption trennen. Die Absorption kann z.B. mit Wasser oder wäßrigen Laugen, die Adsorption z.B. mit Kieselgel, Aluminiumoxide und/oder Aktivkohle durchgeführt werden. Bevorzugt setzt man regenerierbare Aktivkohle ein.

Das erfindungsgemäße Verfahren hat eine Reihe von überraschenden Vorteilen. So kann man die Reaktion in einer stets gleichmäßig aktiven Reaktionszone durchführen, für die Reaktion steht eine ständig sich erneuernde Oberfläche der Salzschmelze zur Verfügung, man verfügt über eine weitgehende Freiheit hinsichtlich der Wahl der Bedingungen für die Schmelze und der Gasströme, es lassen sich hohe Umsätze und hohe Raum-/Zeit-Ausbeuten erzielen und es werden nur relativ geringe Mengen Salzschmelze und relativ Kleine Apparate benötigt. Vorteilhaft ist ferner, daß die Umsetzung ohne Energiezufuhr von außen, unter kontinuierlicher Reaktionsführung, ohne Probleme bezüglich der Langzeitstabilität der Reaktoren, mit Abtrennung des Reaktionswassers in Form einer konzentrierten wäßrigen Salzsäure, mit einer hohen Konzentration an Chlor im Reaktionsgas und mit einer Abtrennung des Chlors durch Kompression und Verflüssigung ohne Fremdlösungsmittel durchgeführt werden kann.

### Beispiele

### Beispiel 1

In einer kontinuierlich zu betreibenden Apparatur wurde pro Stunde ein Gasgemisch bestehend aus 3900 g Chlorwasserstoff, 854 g Sauerstoff, 211 g Chlor und 192 g Stickstoff in einem Rieselfilmreaktor bei 370°C in Gegenwart einer Salzschmelze umgesetzt. Die Salzschmelze bestand aus 9000 g des eutektischen Gemisches aus Kaliumchlorid und Kupfer(I)-dichlorid. Zur Umsetzung wurde die Salzschmelze in Intervallen pneumatisch mit dem Eduktgasstrom in ein oberhalb der Füllkörperschüttung gelegenes Vorratsgefäß gefördert und kontinuerlich auf die Füllkörperschüttung dosiert. Der Durchmesser der Füllkörperschüttung betrug 40 mm. Das auf 370°C vorgeheizte Eduktgasgemisch wurde von unten nach oben durch die Füllkörperschüttung geleitet. Das den Reaktor verlassende heiße Produktgasgemisch bestand aus 780 g Chlorwasserstoff, 160 g Sauerstoff, 3245 g Chlor, 780 g Wasser und 192 g Stickstoff. Es wurde in einem Einspritzkühler mit 408 g 34 Gew.-%iger wäßriger Salzsäure auf 150°C abgekühlt und in einem nachgeschalteten, bereits mit 3526 g 34 Gew.-%iger wäßriger Salzsäure gefüllten Absorptionsturm das gebildete Reaktionswasser und nicht-umgesetzter Chlorwasserstoff in Form von 34 Gew.-%iger wäßriger Salzsäure abgetrennt. Auf diese Weise wurden 397 g Chlorwasserstoff, 769 g Wasser und 9 g Chlor abgetrennt. Das verbleibende Reaktionsgas (stündlich 383 g Chlorwasserstoff, 160 g Sauerstoff, 3236 g Chlor und 192 g Stickstoff) wurde mit konz. Schwefelsäure in einem Trockenturm getrocknet, anschließend auf 6 bar komprimiert und auf -10°C abgekühlt. Dabei fielen 2308 g Chlor in flüssiger Form an, das zusätzlich 91 g Chlorwasserstoff in gelöster Form enthielt. Die nicht kondensierten Anteile des Gases wurden in eine zweite, bei -25°C betriebenen Kondensationsstufe geführt, wobei weitere 576 g Chlor und weitere 41 g Chlorwasserstoff in flüssiger Form abgetrennt wurden.

Aus dem nicht-kondensierten Restgas wurde ein Teilstrom, bestehend aus 100 g Chlorwasserstoff, 63 g Sauerstoff, 141 g Chlor und 75 g Stickstoff ausgeschleust. Der verbleibende Gasstrom (stündlich 150 g Chlorwasserstoff, 94 g Sauerstoff, 211 g Chlor und 112 g Stickstoff) wurde in den Reaktor zurückgeführt.

### Beispiel 2

In einem kontinuierlich betriebenen Rieselfilmreaktor wurde pro Stunde ein auf 480°C vorgeheiztes Gasgemisch, bestehend aus 5967 g Chlorwasserstoff, 888 g Sauerstoff, 248 g Chlor, 124 g Wasserdampf und 154 g Stickstoff bei 480°C in Gegenwart einer Salzschmelze wie in Beispiel 1 beschrieben umgesetzt. Das den Reaktor verlassende heiße Produktgasgemisch bestand stündlich aus 2586 g Chlorwasserstoff, 137 g Sauerstoff, 3536 g Chlor, 970 g Wasser und 154 g Stickstoff. Es wurde in einem Einspritzkühler mit 29 Gew.-%iger wäßriger Salzsäure auf 150°C abgekühlt und in einem nachgeschalteten Absorptionsturm das gebildete Reaktionswasser und nicht-umgesetzter Chlorwasserstoff in Form von 29 Gew.-%iger Salzsäure abgetrennt. Die abgetrennten Mengen waren 334 g Chlorwasserstoff und 830 g Wasser. Desweiteren wurde wie in Beispiel 1 beschrieben verfahren. Es fielen insgesamt 3284 g flüssiges Chlor an, die 31 g Chlorwasserstoff und 8 g Sauerstoff enthielten. Aus dem nicht-kondensierten Gas wurde ein Teilstrom ausgeschleust, der stündlich aus 1 g Chlorwasserstoff, 64 g Sauerstoff, 87 g Chlor und 72 g Stickstoff bestand. Das Restgas wurde in den Reaktor zurückgeführt.

### Beispiel 3

In einem kontinuierlich betriebenen Rieselfilmreaktor wurde pro Stunde ein auf 480°C vorgeheiztes Gasgemisch, bestehend aus 326 g Chlorwasserstoff und 71 g Sauerstoff bei 480°C in Gegenwart einer Salzschmelze wie in Beispiel 1 beschrieben umgesetzt. Die Salzschmelze bestand aus einem Gemisch von 1174 g Kaliumchlorid, 1001 g Kupfer(I)-chlorid, 2255 g Kupfer(II)-chlorid und 600 g Neodymchloridhydrat. Pro Stunde wurden 25 l Schmelze über eine mit Raschig-Ringen gefüllte Kolonne (d = 50 mm; h = 70 mm) dosiert und im Gegenstrom mit den Eduktgasen umgesetzt. Das den Reaktor verlassende Produktgasgemisch bestand stündlich aus 218 g Chlorwasserstoff, 47,2 g Sauerstoff, 104 g Chlor und 26,5 g Wasserdampf. Wie in Beispiel 1 beschrieben, wurden die Produktgase in einem Einspritzkühler mit wäßriger Salzsäure auf 150°C gekühlt, das Reaktionswasser in einem Absorptionsturm als wässrige Salzsäure abgetrennt, die Produktgase mit konz. Schwefelsäure getrocknet und Chlor durch Verdichten auf 6 bar und Abkühlen auf -10°C in flüssiger Form genommen.

### Beispiel 4

In einem kontinuierlich betriebenen Rieselfilmreaktor wurde pro Stunde ein auf 480°C vorgeheiztes Gasgemisch, bestehend aus 81,5 g Chlorwasserstoff und 17,8 g Sauerstoff bei 480°C in Gegenwart einer Salzschmelze wie in Beispiel 1 beschrieben umgesetzt. Die Salzschmelze bestand aus einem Gemisch von 1174 g Kaliumchlorid, 1001 g Kupfer(I)-chlorid, 2255 g Kupfer(II)-chlorid und 600 g Neodymchloridhydrat. Pro Stunde wurden 25 l Schmelze über eine mit Raschig-Ringen gefüllte Kolonne (d = 50 mm; h = 70 mm) dosiert und im Gegenstrom mit den Eduktgasen umgesetzt. Das den Reaktor verlassende Produktgasgemisch bestand stündlich aus 27,3 g Chlorwasserstoff, 5,9 g Sauerstoff, 52,6 g Chlor und 13,3 g Wasserdampf. Wie in Beispiel 1 beschrieben, wurden die Produktgase in einem Einspritzkühler mit wäßriger Salzsäure auf 150°C gekühlt, das Reaktionswasser in einem Absorptionsturm als wässrige Salzsäure abgetrennt, die Produktgase mit konz. Schwefelsäure getrocknet und Chlor durch Verdichten auf 6 bar und Abkühlen auf -10°C in flüssiger Form genommen.

### Beispiel 5

In einem kontinuierlich betriebenen Rieselfilmreaktor wurde pro Stunde ein auf 480°C vorgeheiztes Gasgemisch, bestehend aus 407,5 g Chlorwasserstoff und 85,2 g Sauerstoff bei 450°C in Gegenwart einer Salzschmelze wie in Beispiel 1 beschrieben umgesetzt. Die Salzschmelze bestand aus einem Gemisch von 1174 g Kaliumchlorid, 1001 g Kupfer(I)-chlorid und 2255 g Kupfer(II)-chlorid. Pro Stunde wurden 20,6 l Schmelze über eine mit Raschig-Ringen gefüllte Kolonne (d = 50 mm; h = 70 mm) dosiert und im Gegenstrom mit den Eduktgasen umgesetzt. Das den Reaktor verlassende Produktgasgemisch bestand stündlich aus 361,7 g Chlorwasserstoff, 75,6 g Sauerstoff, 44,3 g Chlor und 11,25 g Wasserdampf. Wie in Beispiel 1 beschrieben, wurden die Produktgase in einem Einspritzkühler mit wäßriger Salzsäure auf 150°C gekühlt, das Reaktionswasser in einem Absorptionsturm als wässrige Salzsäure abgetrennt, die Produktgase mit konz. Schwefelsäure getrocknet und Chlor durch Verdichten auf 6 bar und Abkühlen auf -10°C in flüssiger Form genommen.

## Patentansprüche

1. Verfahren zur Oxidation von Chlorwasserstoff mit Sauerstoff in Gegenwart einer Salzschmelze, dadurch gekennzeichnet, daß man
- eine Salzschmelze einsetzt, die Metallsalze, schmelzpunktserniedrigende Salze und Promotoren enthält,
- bei Temperaturen zwischen 300 und 600°C arbeitet,
- die Salzschmelze in dem Chlorwasserstoff und Sauerstoff enthaltenden Gas kontinuierlich so dispergiert, daß Kontaktzeiten von 0,01 bis 100 Sekunden resultieren,
- die Reaktionsgase abkühlt und Chlorwasserstoff und Wasser aus dem Reaktionsgemisch abscheidet,
- die von der Hauptmenge Wasser und einen Teil des Chlorwasserstoffs befreiten Reaktionsgase mit Schwefelsäure von restlichem Wasser befreit und
- das dann im wesentlichen Chlor, Chlorwasserstoff und Sauerstoff enthaltende Gasgemisch auf 2 bis 10 bar komprimiert, das Chlor durch Abkühlen verflüssigt und gegebenenfalls nach weiterer Reinigung, abtrennt und
das verbleibende, im wesentlichen Sauerstoff enthaltende Gas ganz oder teilweise in die die Reaktionszone zurückführt.

2. Verfahren nach Anspruch 1, dadurch gekennzeichnet, daß man das nach der Abtrennung von Chlor vorliegende Sauerstoff enthaltende Gas nur teilweise in die Reaktionszone zurückführt und aus dem Rest des Gases die nicht kondensierten Anteile von Chlor, Chlorwasserstoff und gegebenenfalls organischen Verunreinigungen durch Absorption und/oder Adsorption abtrennt.

3. Verfahren nach Ansprüchen 1 und 2, dadurch gekennzeichnet, daß man eine Salzschmelze einsetzt, die ein Gemisch aus Kaliumchlorid und Kupfer(I)-chlorid enthält, bei 350 bis 550°C arbeitet und die Reaktionsgase zur Abscheidung von Chlorwasserstoff und Wasser auf Temperaturen unter 300°C abkühlt.

4. Verfahren nach Ansprüchen 1 bis 3, dadurch gekennzeichnet, daß man eine Salzschmelze einsetzt, die Kaliumchlorid, Kupfer(I)-chlorid und Eisen(III)-chlorid enthält.

5. Verfahren nach Ansprüchen 1 bis 4, dadurch gekennzeichnet, daß man eine Salzschmelze einsetzt, die Kaliumchlorid, Kupfer(I)-chlorid, Neodymtrichlorid und gegebenenfalls Praseodymtrichlorid enthält.

6. Verfahren nach Ansprüchen 1 bis 5, dadurch gekennzeichnet, daß man die Salzschmelze in einein Kieselfilmreaktor mit Chlorwasserstoff und Sauerstoff umsetzt.

7. Verfahren nach Ansprüchen 1 bis 5, dadurch gekennzeichnet, daß man die Salzschmelze in einem Düsenreaktor mit Chlorwasserstoff und Sauerstoff umsetzt.

8. Verfahren nach Ansprüchen 1 bis 5, dadurch gekennzeichnet, daß man die Salzschmelze in einem Sprühturm mit Chlorwasserstoff und Sauerstoff umsetzt.

## Claims

1. Process for the oxidation of hydrogen chloride with oxygen in the presence of the salt melt, characterized in that
- a salt melt which contains metal salts, salts depressing the melting point and promoters is employed,
- temperatures between 300 and 600°C are employed,
- the salt melt is continuously dispersed in the gas containing hydrogen chloride and oxygen in such a way that contact times of 0.01 to 100 seconds result,
- the reaction gases are cooled and hydrogen chloride and water are separated out of the reaction mixture,
- the reaction gases freed from most of the water and some of the hydrogen chloride are freed from residual water using sulphuric acid and
- the gas mixture then essentially containing chlorine, hydrogen chloride and oxygen is compressed to 2 to 10 bar, the chlorine is liquefied by cooling and, if appropriate after further purification, is separated off, and
- the remaining, essentially oxygen-containing gas is recycled in whole or in part to the reaction zone.

2. Process according to Claim 1, characterized in that the oxygen-containing gas present after chlorine has been separated off is only partially recycled to the reaction zone and, from the rest of the gas, the non-condensed portions of chlorine, hydrogen chloride and possibly organic impurities are separated off by absorption and/or adsorption.

3. Process according to Claims 1 and 2, characterized in that a salt melt which contains a mixture of potassium chloride and copper(I) chloride is used, the procedure is carried out at 350 to 550°C and the reaction gases are cooled to temperatures below 300°C to separate off hydrogen chloride and water.

4. Process according to Claims 1 to 3, characterized in that a salt melt which contains potassium chloride, copper(I) chloride and iron(III) chloride is used.

5. Process according to Claims 1 to 4, characterized in that a salt melt which contains potassium chloride, copper(I) chloride, neodymium trichloride and if appropriate praseodymium trichloride is used.

6. Process according to Claims 1 to 5, characterized in that the salt melt is reacted with hydrogen chloride and oxygen in a trickling film reactor.

7. Process according to Claims 1 to 5, characterized in that the salt melt is reacted with hydrogen chloride and oxygen in a jet reactor.

8. Process according to Claims 1 to 5, characterized in that the salt melt is reacted with hydrogen chloride and oxygen in a spray tower.

## Revendications

1. Procédé pour l'oxydation de chlorure d'hydrogène avec de l'oxygène en présence d'une masse de sels en fusion, caractérisé en ce que
- on utilise une masse de sels en fusion qui contient des sels métalliques, des sels abaissant le point de fusion et des promoteurs,
- on travaille à des températures comprises entre 300 et 600°C,
- on disperse la masse de sels en fusion en continu dans le gaz contenant du chlorure d'hydrogène et de l'oxygène, de telle sorte qu'il en résulte des temps de contact de 0,01 à 100 s,
- on refroidit les gaz de la réaction et on sépare le chlorure d'hydrogène et l'eau du mélange réactionnel,
- on libère les gaz de la réaction libérés de la quantité principale d'eau et d'une partie du chlorure d'hydrogène de l'eau résiduelle avec de l'acide sulfurique et
- on comprime alors le mélange gazeux contenant essentiellement du chlore, du chlorure d'hydrogène et de l'oxygène à une pression de 2 à 10 bars, on liquéfie le chlore par refroidissement et on le sépare éventuellement après une purification supplémentaire et
- on renvoie le gaz résiduel contenant essentiellement de l'oxygène totalement ou partiellement dans la zone de réaction.

2. Procédé selon la revendication 1, caractérisé en ce que l'on renvoie uniquement partiellement dans la zone de réaction le gaz contenant de l'oxygène présent après la séparation de chlore et on sépare du reste du gaz les parts non condensées de chlore, de chlorure d'hydrogène et éventuellement d'impuretés organiques par absorption et/ou adsorption.

3. Procédé selon les revendications 1 et 2, caractérisé en ce que l'on utilise une masse de sels en fusion qui contient un mélange de chlorure de potassium et de chlorure de cuivre (I), on travaille à une température de 350 à 550°C et on refroidit les gaz de la réaction pour la séparation de chlorure d'hydrogène et d'eau à des températures inférieures à 300°C

4. Procédé selon les revendications 1 à 3, caractérisé en ce que l'on utilise une masse de sels en fusion qui contient du chlorure de potassium, du chlorure de cuivre (I) et du chlorure de fer (III).

5. Procédé selon les revendications 1 à 4, caractérisé en ce que l'on utilise une masse de sels en fusion qui contient du chlorure de potassium, du chlorure de cuivre (I), du trichlorure de néodyme et éventuellement du trichlorure de praséodyme.

6. Procédé selon les revendications 1 à 5, caractérisé en ce que l'on fait réagir la masse de sels en fusion dans un reacteur à film ruisselant avec du chlorure d'hydrogène et de l'oxygène.

7. Procédé selon les revendications 1 à 5, caractérisé en ce que l'on fait réagir la masse de sels en fusion dans un réacteur à buses avec du chlorure d'hydrogène et de l'oxygène.

8. Procédé selon les revendications 1 à 5, caractérisé en ce que l'on fait réagir la masse de sels en fusion dans une tour de pulvérisation avec du chlorure d'hydrogène et de l'oxygène.
